# EUROPEAN PATENT APPLICATION

(11) **EP 4 838 392 A1**
(43) Date of publication of application: **11.11.2026**
(21) Application number: 25174598.0
(22) Date of filing: 06.05.2025
(51) Int. Cl.: G06F 21/53, H04L 67/12, G05B 15/00

(54) **SMART FIELD DEVICE AGENT**

(71) Applicant: ABB SCHWEIZ AG, 5400 Baden (CH)
(72) Inventor: MERLIN, Tilo, 63589 Linsengericht (DE); KAMATH, Shanthala, Bothell, 98012 (US); PANG, Zhibo, 722 40 Västerås (SE); JOHANSSON, Bjarne, 722 22 Västerås (SE); LANDERNÄS, Krister, 734 31 Hallstahammar (SE)
(74) Representative: Maiwald GmbH

(57) **Abstract**

The invention relates to the field of field devices, particularly to a smart field device agent (100) for transforming a value from a frontend device (200) to a server (300). The frontend device (200) has no means for a functional update. The field device agent (100) comprises a first interface (110) supporting a first communication line (250) between the field device agent (100) and the frontend device (200); a second interface (120) supporting a second communication line (350) between the field device agent (100) and the server (300); and a virtualization module (140). The virtualization module (140) comprises a sandbox component (142); a converter component (144); and an update component (146).

## Description

### Technical Field

The invention relates to the field of field devices, particularly to a smart field device agent. The invention further relates to a field device system and to a use.

### Background

Field devices contain in many cases not only a frontend-sensor, but extensive additional logic components, e.g. for processing the data of the frontend-sensor, for diagnostic means, for supporting high-level protocols, and/or further components.

This may not only increase the field device's complexity - resulting, e.g., in several 100,000 lines of code -, but also its power consumption, and/or a need for regular updates of the field device's code. Therefore, means for reducing the field device's complexity would be desirable.

### Description

It is an objective of the disclosure to provide a field device with reduced complexity. This objective is achieved by the subject-matter of the independent claims. Further embodiments are evident from the dependent claims and the following description.

One aspect relates to a field device agent for transforming a value from a frontend device to a server, wherein the frontend device has no means for a functional update, the field device agent comprising a first interface supporting a first communication line between the field device agent and the frontend device; a second interface supporting a second communication line between the field device agent and the server; and a virtualization module. The virtualization module comprises a sandbox component; a converter component; and an update component.

By providing the field device agent, the complexity of the frontend device can be reduced significantly. The frontend device may, then, only contain a sensor, an ADC (analog-to-digital converter), which transforms the sensor's (analog) values to digital values, and means for supporting a protocol for transmitting the digital values. Due to its simplicity (or: reduced complexity), the frontend device has no means for a functional update. In other words: changing anything - particularly: any entry in a memory - inside the frontend device is not possible during the operation of said frontend device. A single exception may be an update that is performed at the very first installation of the frontend device, e.g. for programming a WORM memory (WORM: write once read multiple) that may contain, e.g., the frontend device's serial number, MAC-address, etc. A - not-allowed or even not-possible - "functional update" may include an update for correcting the sensor's transformed digital values (e.g. to compensate ageing effects), for changing specifics of the transmitting protocol, for removing errors in the frontend device's firmware, etc. Having no means for a functional update may not exclude "writing" commands to the frontend device, e.g. for requesting a data transmission.

It should be noted that the field device agent is described, in the following, mainly for a frontend device that comprises a sensor. But, another embodiment of the frontend device may comprise an actuator. Most of the following considerations may apply to such an "actuator frontend device" in a similar or analogous way.

The field device agent is an "intermediate" device between the frontend device and a server. The server may, for instance, be a PLC (programmable logic controller) or another type of a controlling device in an industrial automation plant. The server may be a PC, an enterprise computer, and/or a part of a so-called "cloud". The field device agent may be a device of its own, or it may be integrated in the server. The field device agent may usually be physically separated from the frontend device.

The communication means between the field device agent and the frontend device may usually support a simple, e.g. a simple serial bus, but may not be limited to this. The first interface of the field device agent supports the first communication line (or communication means) between the field device agent and the frontend device. The first interface of the field device agent may support, basically, a plurality of protocols, from which the frontend device and the field device agent can select. In some embodiments, the first interface may be designed as an adaptive interface, so that at least some protocols can be selected in an automated way. The first interface may be configured for receiving a digital value, e.g. a measurement value from the frontend device. The first interface may, further, be configured for sending a "request (e.g. for data)" command to the frontend device. The communication line may be secured, e.g. by encryption means. The first interface may comprise a first buffer for receiving the data from the first communication line.

The field device agent comprises a second interface. The second interface supports a second communication line between the field device agent and the server. The second interface may comprise a second buffer ("backend buffer"). The second interface may be able or configured to support a high-level protocol, such as OPC UA (Open Platform Communications Unified Architecture).

The field device agent comprises a virtualization module. In cases when a plurality of frontend device are connected the field device agent, the field device agent may comprise a plurality of virtualization module, which are separated from each other. "Separated" may comprise a logical separation between the virtualization modules. To ensure the separation between the virtualization modules, each virtualization module may comprise a sandbox component. The virtualization function within the virtualization module may be done by a so-called "platform as a service (PaaS)" component, for instance provided by the Docker software, which provides so-called "containers", which are isolated from one another and bundle their own software, libraries and configuration files. The resources of the host (e.g. CPU, memory, network access) may be used by all device agents. The containers can communicate with each other through well-defined channels. Each device agent is addressable by its own IP-address. The separation between the virtualization modules may, e.g., have the advantage that the effects of errors are limited to the container in which the error occurs. Additional virtual networks can be configured within the host via which the device agents can communicate. This makes it possible to centralize functionalities such as PROFINET communication. This is not mandatory. Each container can also be implemented independently or mixed forms can be used.

The field device agent comprises a converter component, which may be configured for transforming a digital value from the first interface to a value and protocol, which can be evaluated by the second interface. When, as an example, the frontend device is configured for performing a temperature measurement by means of a PTC (Positive Temperature Coefficient), e.g. by means of a "Pt100" sensor, an ADC of the frontend device may send a digital value "130.3" (e.g. ohms) to the field device agent's first interface. The converter component may, then, transform this digital value to a digital temperature value of 78.5°C, so that the second interface can send this value - along with further values that are necessary and/or useful for the server - to said server.

The field device agent comprises an update component. The update component may support all the functional updates the frontend device is not able to perform, e.g. error corrections, adaptations, etc.

This solution provides means for providing a field device - exactly speaking: a frontend device - with reduced complexity, because all the complexity of the field device is shifted into the field device agent. A "field device" comprises, then, the frontend device plus the field device agent. The frontend device has intentionally no flexibility and very few components. Due to this, the frontend device can be a device of low cost and having low energy consumption. This concept may, further, be a basis for a highly secure field device, because the frontend device has no means for a functional update. For implementing a complete security concept, further means may be required.

In various embodiments, the virtualization module further comprising at least one of: an encryption machine; a protocol engine; a data processing unit; a data analytics unit; a data storage unit for measurements and diagnostic measurements; an access rights management unit; a self-diagnostic unit; and/or a process diagnostic unit. The self-diagnostic unit may build and/or check a checksum or CRC (cyclic redundancy check) for checking data integrity. Additionally or as an alternative, a device health status may be composed by an additional secondary measurement performed by the frontend device (and triggered by the field device agent). This may contribute to improve, e.g., an effective signal noise, an effective signal amplitude, and/or an effective jitter. The term "effective" may be interpreted as what is provided at the field device agent's output. To this end, a process diagnostic unit may analyse a primary and secondary measurement from the frontend device for detecting process conditions, such as detection of bubbles in a flowing fluid in a pipe by detecting transients of density, or foam on a fluid, in a storage tank. This may cause a weakened reflection signal of a laser beam, which may be sent, e.g., from a top of tank down to the fluid that is measured.

In various embodiments, the first communication line is a secured communication line. This may ensure or improve the data integrity of the first communication line.

In various embodiments, the frontend device is configured for sending the value to the field device agent periodically and/or on demand. The frequency of periodically sending may be determined in a manufacturing plant or at a first installation. When allowing to send the value on demand, the communication line (and/or the protocol) may enable a bidirectional communication, but may not be allowed to change anything - e.g. a memory entry in the frontend device - by this bidirectional communication.

In various embodiments, the sending frequency has an upper and/or a lower limit. The upper and/or a lower limit may apply to periodically sending, e.g. for dimensioning the communication in a precise way. The upper and/or a lower limit may apply to a sending on demand. In this case, the upper limit - i.e. the maximum frequency - may be selected in a way to avoid a DDoS attack and/or considering further criteria. The lower limit - i.e. minimum frequency - may be selected in a way to realize a "keep alive" functionality.

In various embodiments, the first communication line and/or the second communication line is wired and/or wireless.

In some embodiments, the first communication line and the second communication line may be implemented as one line only, e.g. by using Ethernet APL.

In various embodiments, the first communication line supports at least one of following protocols: a Highway Addressable Remote Transducer, HART, protocol; a Modbus protocol; a Message Queueing Telemetry Transport, MQTT, protocol; a (simple) serial bus protocol, e.g. RS-232, DALI, SPI, CAN bus, I²C, UNI/O, 1-Wire; or a proprietary protocol. The field device agent may support a plurality of protocols.

In various embodiments, the field device agent is physically separated from the frontend device. In these embodiments, the field device agent may run on a device with higher performance and/or energy demand. The field device agent may be connected to a regular energy net, whilst the frontend device is not, or may be even an autonomously working device.

In various embodiments, the field device agent is physically integrated in the server device. This may be particularly advantageous for scenarios in an industrial plant, in which the server may be integrated in a controller device, e.g. in a PLC.

In various embodiments, the second interface is configured for supporting at least one of an Open Platform Communications Unified Architecture, OPC UA, protocol, a PROFINET protocol, any Ethernet and/or IP protocol, or a Modbus protocol.

An aspect relates to a field device system, comprising a frontend device and a field device agent according to any one of the preceding claims.

In some embodiments, the frontend device is one of: a temperature measuring device; a fill level measuring device; a flow measurement device; a pressure measurement device; or a pH or conductivity measurement device. Additionally or as an alternative, the frontend device may be not a measurement frontend, but just for forwarding a value, e.g. received via a communication means, e.g. Bluetooth.

In various embodiments, the field device agent is configured for combining values from a plurality of frontend devices. The field device agent may support a functional combination of a plurality of frontend devices, e.g. for redundancy, and/or for a combined functionality. Examples may be a combination of two PTCs, or a combination of a PTC and an NTC for temperature measurement.

An aspect relates to a field device agent for transforming a value from a server to a frontend device, wherein the frontend device has no means for a functional update, the field device agent comprising: a third interface supporting a third communication line between the server and the field device agent; a fourth interface supporting a fourth communication line between the field device agent and the frontend device; and a virtualization module. The virtualization module comprising: a sandbox component; a converter component; and an update component. This embodiment may be particularly applicable to an actuator-like frontend device.

An aspect relates to a use of a field device agent for transforming a value, particularly a measurement value, sent from a frontend device to a value-format suitable for a server.

For further elucidation, the disclosure is described by means of embodiments shown in the figures. These embodiments are to be considered as examples only, but not as limiting.

### Brief Description of the Drawings

The drawings depict:
- **Fig. 1**: schematically a field device according to state of the art;
- **Fig. 2**: schematically a field device according to an embodiment;
- **Figs. 3 and 4**: schematically a field device according to an embodiment;
- **Figs. 5a, 5b**: schematically a plurality of field devices according to an embodiment.

### Detailed Description of Embodiments

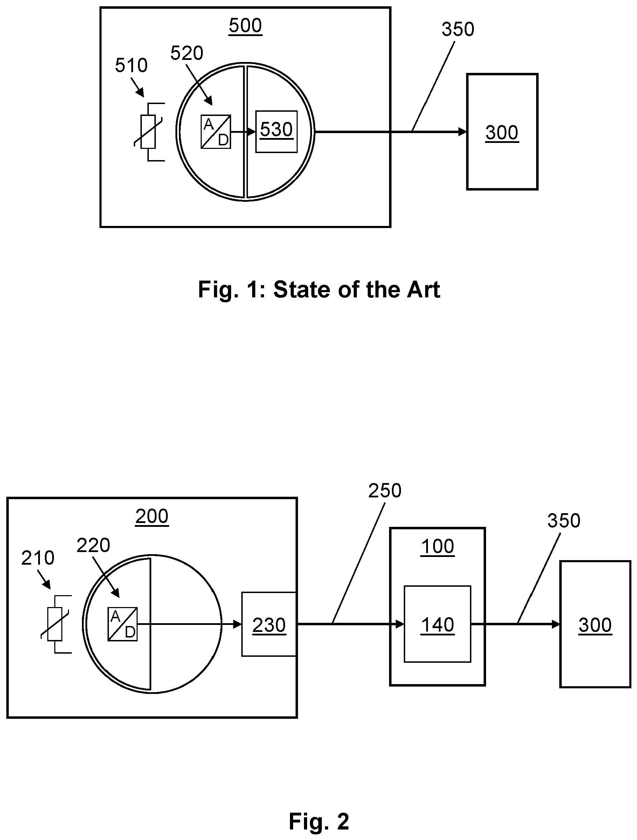

**Fig. 1** shows schematically a field device 500 according to state of the art. The field device 500 comprises a sensor 510, e.g. a temperature sensor like Pt100. The field device 500 comprises an ADC 520 (analog-to-digital converter), which transforms analog values from the sensor 510 to digital values. The digital values are then send to a control and computation device 530 within the field device, e.g. a CPU with combined memory and register, so that a corrected and/or otherwise processed value can be transferred to a server 300, via a communication line 350. The communication line 350 may support high-level protocols, such as OPC UA (Open Platform Communications Unified Architecture). The field device 500 may provide a high flexibility and much information. However, at least some of these types of field devices have a high power consumption and need, sometimes caused by their complexity, several updates, e.g. to ensure a high flexibility. Note that the arrows, both in this figure and in the following figures, depict the "main information direction", not an exclusive information direction. Information - e.g. control and/or triggering signals - may also be sent in the opposite direction of the arrows.

**Fig. 2** shows schematically a field device system 400 according to an embodiment. The field device system 400 comprises a frontend device 200 and a field device agent 100. The frontend device 200 comprises a sensor 210, e.g. a temperature sensor like Pt100, and an ADC 220. The frontend device 200 further comprises a bus interface 230 for sending data to and, optionally, receiving data from a first interface 250. The frontend device 200 has no means for a functional update. The field device agent 100 processes the data from the frontend device 200 and sends the processed data, via a second communication line 350, to a server 300. Thus, from the server's point of view, it looks like receiving data from a conventional field device. However, the processing is not performed in the frontend device 200, but in the field device agent 100, e.g. in its virtualization module 140. Due to this, the frontend device 200 can be designed as a low-cost device with only little power consumption.

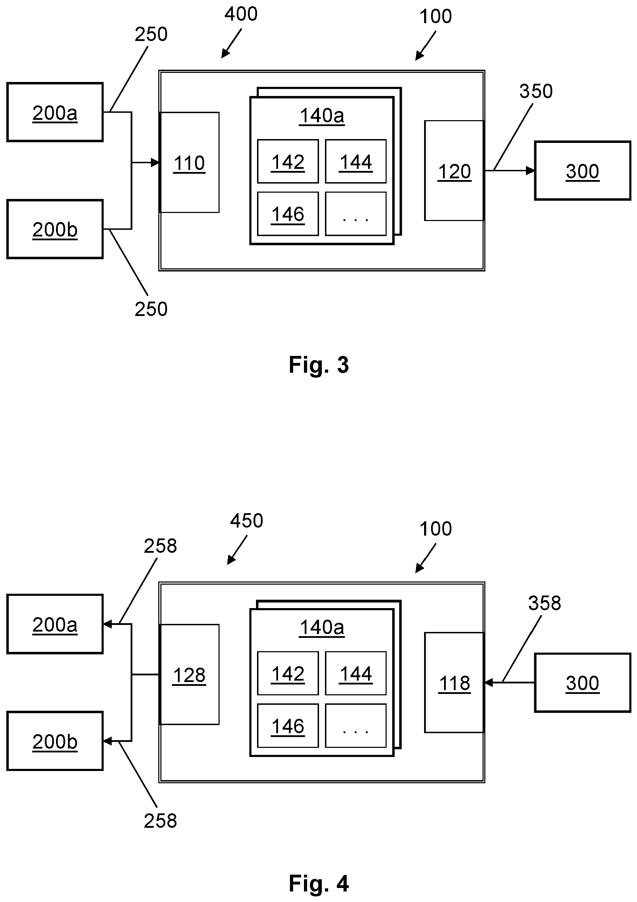

**Fig. 3** shows schematically a field device system 400 comprising two frontend devices 200a and 200b, and a field device agent 100. Details of the frontend devices 200 are shown in **Fig. 2****.** The frontend devices 200a, 200b send data ("raw data") via a first interface 250 to a first interface 110 of the field device agent 100. The data from the frontend devices 200a, 200b are, then, forwarded to a virtualization module 140a and 140b, respectively. Each of the frontend devices 200a, 200b may correspond to a respective virtualization module 140a, 140b, i.e. each frontend device 200a, 200b may send its data to the respective virtualization module 140a, 140b for processing the data, logically independent and separated, e.g. by virtualization means, from each other. The virtualization module 140b is depicted behind virtualization module 140a. Each virtualization module 140a, 140b comprises a sandbox component 142, a converter component 144, and an update component 146. The virtualization modules 140a, 140b may comprise further components, e.g. an encryption machine for supporting a secure communication. The virtualization modules 140a, 140b process the data and send them to a second interface 120. This second interface 120 sends the data via a second communication line 350, to a server 300.

**Fig. 4** shows schematically a field device system 450 comprising two frontend devices 200a and 200b, and a field device agent 100. **Fig. 4** is quite similar to **Fig. 3****,** but the frontend devices 200a and 200b do not contain a sensor 210 (see **Fig. 2****)** each, but each of them contains an actuator instead. The actuator may be one of a valve, a motor, a heating, and/or of other type of actuators. The direction of the data transport is, consequently, reversed, compared to **Fig. 3****.** Thus, the server 300 sends, via a third communication line 358, data to a field device agent 100. The field device agent 100. From the server's point of view, it looks like sending data to a conventional field device. The communication line 358 may be the same like the second communication line 350 of **Fig. 3****.** The data are received by a third interface 118 and forwarded to a virtualization module 140a, 140b, for the respectively frontend devices 200a and 200b. The virtualization modules 140a, 140b may have the same structure as for sensor frontend devices, but - of course - with "reversed" functionality. Thus, the virtualization modules 140a, 140b transform data from server 300 to data that control the frontend devices 200a and 200b. The data are send via a fourth interface 128 and a fourth communication line 258. The fourth communication line 258 may support a similar protocol like the first communication line 250.

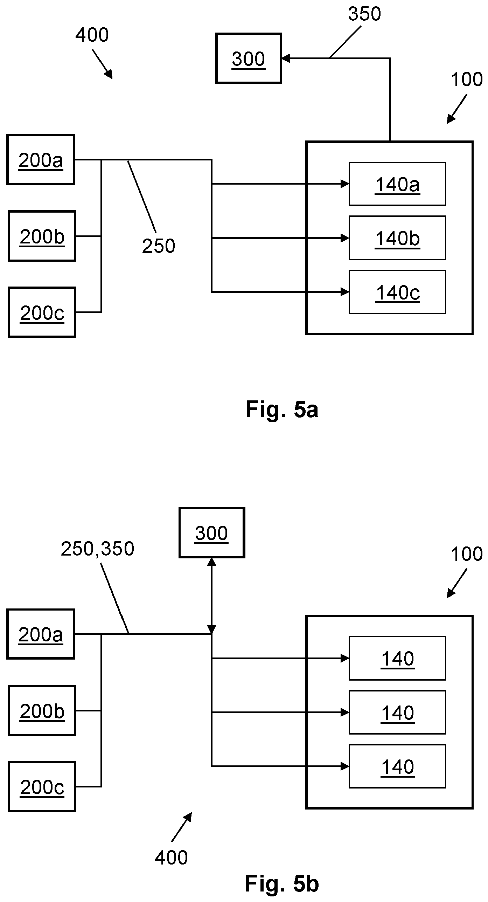

**Fig. 5a** shows schematically a field device system 450 comprising three sensor frontend devices 200a to 200c, and a field device agent 100. Each virtualization module 140a to 140c supports one frontend device 200a to 200c, respectively. The frontend devices 200a to 200c are connected via a first communication line 250 to the field device agent 100. The field device agent 100 is connected via a second communication line 350 to a server 300.

**Fig. 5b** is quite similar to **Fig. 5a. Fig. 5b** also shows schematically a field device system 450 comprising three sensor frontend devices 200a to 200c, and a field device agent 100. In contrast to **Fig. 5a****,** the frontend devices 200a to 200c are connected via a physically common communication line "250, 350" to the field device agent 100 and to a server 300. From a logical point of view, the common communication line "250, 350" still supports two communication lines, i.e. a first logical communication line 250 from the frontend devices 200a to 200c to the field device agent 100, and a second logical communication line 350 from the field device agent 100 to the server 300. The common communication line "250, 350" may, for example, be an Ethernet APL bus.

### List of Reference Symbols

- 100: generic field device agent
- 110: first interface
- 118: third interface
- 120: second interface
- 128: fourth interface
- 140: virtualization module
- 142: sandbox component
- 144: converter component
- 146: update component
- 200: frontend device
- 210: sensor
- 220: ADC, analog-to-digital converter
- 230: bus interface
- 250: first communication line
- 258: fourth communication line
- 300: server
- 350: second communication line
- 358: third communication line
- 400, 450: field device system
- 500: field device
- 510: sensor
- 520: ADC
- 530: control and computation device

## Claims

1. A field device agent (100) for transforming a value from a frontend device (200) to a server (300), wherein the frontend device (200) has no means for a functional update, the field device agent (100) comprising:
a first interface (110) supporting a first communication line (250) between the field device agent (100) and the frontend device (200);
a second interface (120) supporting a second communication line (350) between the field device agent (100) and the server (300); and
a virtualization module (140), comprising:
a sandbox component (142);
a converter component (144); and
an update component (146).

2. The field device agent (100) of claim 1, the virtualization module (140) further comprising at least one of:
an encryption machine;
a protocol engine;
a data processing unit;
a data analytics unit;
a data storage unit for measurements and diagnostic measurements;
an access rights management unit;
a self-diagnostic unit; and/or
a process diagnostic unit.

3. The field device agent (100) of any one of the preceding claims,
wherein the first communication line (250) is a secured communication line.

4. The field device agent (100) of any one of the preceding claims,
wherein the frontend device (200) is configured for sending the value to the field device agent (100) periodically and/or on demand.

5. The field device agent (100) of claim 4,
wherein the sending frequency has an upper and/or a lower limit.

6. The field device agent (100) of any one of the preceding claims,
wherein the first communication line (250) and/or the second communication line (350) is wired and/or wireless.

7. The field device agent (100) of any one of the preceding claims,
wherein the first communication line (250) supports at least one of following protocols:
a Highway Addressable Remote Transducer, HART, protocol;
a Modbus protocol;
a Message Queueing Telemetry Transport, MQTT, protocol; or
a proprietary protocol.

8. The field device agent (100) of any one of the preceding claims,
wherein the field device agent (100) is physically separated from the frontend device (200).

9. The field device agent (100) of any one of the preceding claims,
wherein the field device agent (100) is physically integrated in the server (300) device.

10. The field device agent (100) of any one of the preceding claims,
wherein the second interface (120) is configured for supporting at least one of an Open Platform Communications Unified Architecture, OPC UA, protocol, a PROFINET protocol, an Ethernet APL, or a Modbus protocol.

11. A field device system (400), comprising a frontend device (200) and a field device agent (100) according to any one of the preceding claims.

12. The field device system (400) of claim 11, wherein the frontend device (200) is one of:
a temperature measuring device;
a fill level measuring device;
a flow measurement device;
a pressure measurement device; or
a pH or conductivity measurement device.

13. The field device system (400) of claim 11 or 12, wherein the field device agent (100) is configured for combining values from a plurality of frontend devices (200).

14. A field device agent (100) for transforming a value from a server (300) to a frontend device (200), wherein the frontend device (200) has no means for a functional update, the field device agent (100) comprising:
a third interface (118) supporting a third communication line (358) between the server (300) and the field device agent (100);
a fourth interface (128) supporting a fourth communication line (258) between the field device agent (100) and the frontend device (200); and
a virtualization module (140), comprising:
a sandbox component (142);
a converter component (144); and
an update component (146).

15. Use of a field device agent (100) for transforming a value, particularly a measurement value, sent from a frontend device (200) to a value-format suitable for a server (300).
